# EUROPÄISCHE PATENTSCHRIFT

(11) **EP 4 291 962 B1**
(45) Veröffentlichungstag und Bekanntmachung des Hinweises auf die Patenterteilung: **08.04.2026**
(21) Anmeldenummer: 22709243.4
(22) Anmeldetag: 11.02.2022
(51) Int. Cl.: G05B 19/418

(54) **VERFAHREN ZUR RÜCKVERFOLGUNG VON SCHMIEDETEILEN ÜBER DEN GESAMTEN HERSTELLUNGSPROZESS, INSBESONDERE VOM SCHMIEDEPROZESS, ÜBER SANDSTRAHLEN UND WARMBEHANDLUNG BIS ZUR MECHANISCHEN BEARBEITUNG**
METHOD FOR TRACING FORGED PARTS OVER THE ENTIRE PRODUCTION PROCESS, IN PARTICULAR FROM THE FORGING PROCESS, VIA SANDBLASTING AND HEAT TREATMENT, TO MECHANICAL PROCESSING
PROCÉDÉ PERMETTANT LE TRAÇAGE DE PIÈCES FORGÉES TOUT AU LONG DU PROCESSUS DE FABRICATION, EN PARTICULIER DU PROCESSUS DE FORGEAGE JUSQU'À L'USINAGE MÉCANIQUE EN PASSANT PAR LE SABLAGE ET LE TRAITEMENT À CHAUD

(30) Priorität: 15.02.2021 DE 102021201389; 08.09.2021 DE 102021209878
(43) Veröffentlichungstag der Anmeldung: 20.12.2023
(73) Patentinhaber: SMS group GmbH, 41069 Mönchengladbach (DE)
(72) Erfinder: SCHOLLES, Martin Gerhard, 55129 Mainz (DE); ROSSBACH, Axel, 41352 Korschenbroich (DE); VIEGEN, Frank, 41189 Mönchengladbach (DE)
(74) Vertreter: Kross, Ulrich
(86) Internationale Anmeldenummer: PCT/EP2022/053309
(87) Internationale Veröffentlichungsnummer: WO 2022/171772

(56) Entgegenhaltungen:
- EP-A1- 3 696 630
- LIEWALD MATHIAS ET AL: "On the tracking of individual workpieces in hot forging plants", CIRP JOURNAL OF MANUFACTURING SCIENCE AND TECHNOLOGY, vol. 22, 1 August 2018 (2018-08-01), AMSTERDAM, NL, pages 116 - 120, XP055836579, ISSN: 1755-5817, DOI: 10.1016/j.cirpj.2018.04.002

## Beschreibung

Die Erfindung betrifft ein Verfahren zur Rückverfolgung von Schmiedeteilen über den gesamten Herstellungsprozess, insbesondere vom Schmiedeprozess, über Sandstrahlen und Warmbehandlung bis zur mechanischen Bearbeitung.

Eine Rückverfolgung von Werkstücken ist in vielerlei Hinsicht vorteilhaft. So können beispielsweise bei aufgetretenen Qualitätsproblemen mit einem Werkstück andere Werkstücke identifiziert werden, welche unter vergleichbaren Bedingungen hergestellt wurden, um diese zu überprüfen, auszusortieren oder auszutauschen. Dies ist beispielsweise bei Bauteilen für die Automobilindustrie von Vorteil, da bei Problemen mit einem Bauteil nicht sämtliche Bauteile aus derselben Produktionscharge ausgetauscht werden müssen, was gegebenenfalls mit einer aufwendigen Rückrufaktion verbunden ist, sondern lediglich die Bauteile, die unter vergleichbaren Bedingungen hergestellt wurden. Dazu ist es jedoch erforderlich, dass die Bauteile (Schmiedeteile) über den gesamten Herstellungsprozess rückverfolgt werden können. Zu der Rückverfolgung der Werkstücke zählt auch der Zugriff auf die Prozessparameter der einzelnen Prozessschritte des Herstellungsprozesses.

Eine Rückverfolgung von Schmiedeteilen über den gesamten Herstellungsprozess erfordert eine durchgängige Kennzeichnung der Werkstücke vom Schmiedeprozess, über Sandstrahlen und Warmbehandlung bis zur mechanischen Bearbeitung und der endgültigen Verwendung des fertigen Schmiedeteils. Die während des Schmiedeprozesses herrschenden Umgebungsbedingungen und Begleitumstände in Verbindung mit den Anforderungen an das fertige Schmiedeteil verhindern jedoch eine durchgängige Kennzeichnung der Werkstücke vom Schmiedeprozess, über Sandstrahlen und Warmbehandlung bis zur mechanischen Bearbeitung und der endgültigen Verwendung des fertigen Schmiedeteils. Während und unmittelbar nach dem Schmiedeprozess liegt eine extrem hohe thermische Belastung durch das heiße Werkstück und die entsprechende Wärmestrahlung vor. Ferner weist das Werkstück nach dem Schmiedeprozess eine Verzunderung der Oberfläche auf, welche einen direkten Zugriff auf die Werkstückoberfläche verhindert. Hinzu kommen noch Verunreinigungen durch Sprühmittel wie Grafit. In den folgenden Prozessschritten wird die Verzunderung mittels Verfahren zum mechanischen und/oder thermischen Abtragen von Material, beispielsweise durch Sand- oder Kugelstrahlen, entfernt und die Oberfläche des Werkstücks durch eine Warmbehandlung wie Einsatzhärten, Carbonitrieren oder Vergüten bearbeitet, wodurch eine hohe mechanische Beanspruchung entsteht. Eine durchgängige Kennzeichnung muss unter diesen Bedingungen Bestand haben, gleichzeitig verhindern die Anforderungen an das endgültige Werkstück (Schmiedeteil) jedoch die Verwendung von Kennzeichnungen, die die mechanischen Eigenschaften des Werkstücks negativ beeinflussen. So sind Beschädigungen der Werkstückoberfläche (Kerbwirkung), Verschlechterungen der Korrosionsbeständigkeit oder negative Beeinflussungen des Montageprozesses ausgeschlossen.

Ferner werden die einzelnen Prozessschritte des gesamten Herstellungsprozesses üblicherweise nicht unmittelbar sequentiell aufeinanderfolgend ausgeführt, sondern die Werkstücke werden beispielsweise zwischen einzelnen Prozessschritten zwischengelagert. Ferner werden in einigen Prozessschritten mehrere Werkstücke parallel bearbeitet, was beispielsweise in der Strahlbehandlung oder der Warmbehandlung der Fall ist. Eine durchgängige optische Verfolgung der Werkstücke über den gesamten Herstellungsprozess ist somit nicht möglich. LIEWALD MATHIAS ET AL: "On the tracking of individual workpieces in hot forging plants", August 2018, betrifft das Verfolgen von Werkstücken in einem Schmiedeprozess.

Der Erfindung liegt daher die Aufgabe zugrunde, ein Verfahren zur Rückverfolgung von Schmiedeteilen über den gesamten Herstellungsprozess, insbesondere vom Schmiedeprozess, über Sandstrahlen und Warmbehandlung bis zur mechanischen Bearbeitung, welches sämtliche vorgenannten Anforderungen erfüllt, bereitzustellen.

Die Aufgabe wird erfindungsgemäß gelöst durch ein Verfahren gemäß Anspruch 1. Vorteilhafte Ausgestaltungen des Verfahrens sind in den abhängigen Ansprüchen definiert.

Gemäß dem erfindungsgemäßen Verfahren werden in allen Prozessschritten des Herstellungsverfahrens des Schmiedeteils die zugehörigen Prozessparameter erfasst. Dies erfolgt beispielsweise durch eine Prozessautomation des jeweiligen Herstellungsprozesses. Damit die erfassten Prozessparameter dem hergestellten Werkstück jederzeit entlang der Prozesskette oder der nachfolgenden Verwendung zugeordnet werden können, wird das mittels des Schmiedeprozesses hergestellte Werkstück mittels eines mechanischen Eindringverfahrens mit einer ersten Kennung versehen. Die erste Kennung und die erfassten Prozessparameter werden zur späteren Rückverfolgung in einer Datenbank gespeichert. Anhand der ersten Kennung können zu einem späteren Zeitpunkt die Prozessparameter des Schmiedeprozesses aus der Datenbank abgerufen werden.

Der Schritt des Erfassen von Prozessparametern des Schmiedeprozesses kann erfindungsgemäß das Erfassen von Parametern vor, während und nach dem Schmiedeprozess umfassen. Vor dem Schmiedeprozess werden beispielsweise Rohmaterialdaten erfasst, während des Schmiedeprozesses werden Parameter des Schmiedevorgangs erfasst, wie Kräfte, Temperaturen, usw., und nach dem Schmiedeprozess können Parameter des erzeugten Werkstücks erfasst werden, wie beispielsweise Abmessungen.

Das mechanische Eindringverfahren zur Erzeugung der ersten Kennung hat den Vorteil, dass dadurch die spröde Zunderschicht im Bereich der ersten Kennung automatisch entfernt wird, da diese abplatzt. Auch wirken sich eventuelle Verunreinigungen nicht negativ auf die erste Kennzeichnung aus, da diese durch das mechanische Eindringen in die Oberfläche des Werkstücks erzeugt wird. Da das Werkstück nach dem Schmiedeprozess noch eine sehr hohe Temperatur von bis zu 1250°C aufweist, können die mechanischen Mittel zur Erzeugung der ersten Kennung einfacher in die Werkstückoberfläche eindringen. Auch können die mechanischen Mittel zur Erzeugung der ersten Kennung durch einfache mechanische Vorrichtungen ausgebildet werden, welche den thermischen und mechanischen Belastungen nach dem Schmiedeprozess standhalten.

Die durch das mechanische Eindringverfahren hergestellte erste Kennung bleibt auch in den nachfolgenden Prozessschritten der Strahlbehandlung und Warmbehandlung erhalten, so dass die in diesen Prozessschritten erfassten Prozessparameter zusammen mit den Prozessparametern des Schmiedeprozesses zu der ersten Kennung in der Datenbank gespeichert werden. Bei einer nachfolgenden mechanischen Bearbeitung des Werkstücks, wie beispielsweise Drehen, Fräsen, Schleifen oder dergleichen, wird die erste Kennung entfernt und kann nicht mehr zur Rückverfolgung von dem bearbeiteten Werkstück abgelesen werden. Daher wird das in diesem Prozessschritt bearbeitete Werkstück anschließend mit einer weiteren Kennung versehen, wobei die weitere Kennung mittels eines Lasers oder durch ein Druckverfahren erzeugt wird. Die während des zugehörigen Prozessschritts erfassten Prozessparameter werden zusammen mit der weiteren Kennung der ersten Kennung des entsprechenden Werkstücks in der Datenbank zugeordnet. Somit lässt sich über die weitere Kennung die entsprechende erste Kennung aus der Datenbank abrufen und das Werkstück kann über den gesamten Herstellungsprozess zurückverfolgt werden und es kann auch auf alle entsprechend in der Datenbank gespeicherten Prozessparameter aller Prozessschritte zugegriffen werden.

Theoretisch ist es auch möglich, dass bei einer weiteren Bearbeitung des Werkstücks eine neue Kennung mittels eines Oberflächenbeschriftungsverfahrens aufgebracht wird, falls bei dieser weiteren Bearbeitung die vorherige weitere Kennung nicht erhalten bleibt.

Erfindungsgemäß wird die erste Kennung in einem Bereich des in dem Schmiedeprozess hergestellten Werkstücks erzeugt, welcher in einem der nachfolgenden Prozessschritte entfernt wird. Der Bereich mit der ersten Kennung wird dabei beispielsweise durch die nachfolgende Bearbeitung mechanisch entfernt. Durch das nachfolgende Entfernen der ersten Kennung hat diese mittels des mechanischen Eindringverfahrens erzeugte erste Kennung keinen negativen Einfluss auf das in dem gesamten Herstellungsprozess erzeugte Werkstück (Schmiedeteil).

Gemäß einer vorteilhaften Variante der Erfindung wird die weitere Kennung in einem Bereich des Werkstücks aufgebracht, welche bei der Verwendung des Werkstücks geringen Belastungen ausgesetzt ist. Vorzugsweise wird die weitere Kennung in einem Bereich des Werkstücks aufgebracht, welcher bei der Verwendung des Werkstücks keinerlei Belastungen ausgesetzt ist. Somit hat die weitere Kennung des Werkstücks keinen negativen Einfluss auf die Eigenschaften des Werkstücks. Durch die geringe oder nicht stattfindende Belastung des Bereichs mit der weiteren Kennung bleibt deren Lesbarkeit erhalten, was für eine spätere Rückverfolgung ebenfalls vorteilhaft ist.

Für eine Rückverfolgung ist eine nachträgliche Lesbarkeit der weiteren Kennung aber nicht zwingend erforderlich, sofern dokumentiert wird, wo welche Werkstücke mit deren weiteren Kennungen eingesetzt/montiert wurden.

In einer weiteren erfindungsgemäßen Variante werden neben den Prozessparametern in den Prozessschritten zumindest teilweise Qualitätsdaten erfasst, welche zusammen mit der ersten Kennung und/oder der weiteren Kennung in der Datenbank gespeichert werden. Die Qualitätsdaten werden beispielsweise im Rahmen einer automatischen und/oder manuellen Qualitätsprüfung und/oder Endkontrolle ermittelt. Eine automatische Ermittlung ist bevorzugt, sofern dies möglich ist. Durch die Ermittlung und Speicherung der Qualitätsdaten können die einzelnen Prozessschritte oder eine eventuelle nachfolgende Weiterverarbeitung oder Montage auf die gespeicherten Qualitätsdaten zurückgreifen. Es können also Qualitätsstandards überprüft und gewährleistet werden. Ferner muss gegebenenfalls keine eigene Eingangsprüfung von Werkstücken vorgenommen werden.

Nach einer Variante der Erfindung wird die erste Kennung in einem Bereich des Werkstücks erzeugt, welcher keine Umformung durch den Schmiedeprozess erfährt oder welcher bereits seine endgültige Form durch den Schmiedeprozess erhalten hat. In diesem Bereich des Werkstücks kann die erste Kennung theoretisch vor oder während des Schmiedeprozesses erzeugt werden, da der Schmiedeprozess auf diesen Bereich keinen Einfluss (mehr) hat und die erste Kennung so lesbar bleibt.

Gemäß einer zweckmäßigen Variante der Erfindung wird die erste Kennung mittels eines Nadeldruckverfahrens oder Prägeverfahrens erzeugt.

In einer vorteilhaften Variante bestehen die Prägewerkzeuge (z.B. Nadeln) aus einem Warmarbeitsstahl, Hartmetall oder dergleichen und/oder weisen eine aktive Kühlung auf. Dadurch wird die Standzeit der Nadel für das Nadeldruckverfahren oder Nadelprägeverfahren verlängert.

Nach einer weiteren bevorzugten erfindungsgemäßen Variante umfasst die Vorrichtung zur Erzeugung der ersten Kennung eine passive und/oder aktive thermische Schutzeinrichtung. Eine passive thermische Schutzeinrichtung ist beispielsweise eine Wärmeisolierung und eine aktive thermische Schutzeinrichtung ist beispielsweise eine Kühlung. Dadurch lässt sich der negative Hitzeeinfluss des Schmiedeprozesses bzw. des geschmiedeten Werkstücks auf die Vorrichtung zur Erzeugung der ersten Kennung reduzieren, wodurch sich deren Lebensdauer verlängert und Ausfälle reduziert werden.

Erfindungsgemäß wird die weitere Kennung mittels eines Lasers oder durch ein Druckverfahren erzeugt. Ein Druckverfahren erzeugt die Kennung auf der Oberfläche des Werkstücks und hat somit keinerlei Einfluss auf die mechanischen Eigenschaften des Werkstücks. Allerdings ist eine gedruckte weitere Kennung üblicherweise weniger beständig als in die Oberfläche integrierte weitere Kennungen. Ein Laser erzeugt die weitere Kennung in der Oberfläche des Werkstücks und kann somit theoretisch einen Einfluss auf die mechanischen Eigenschaften des Werkstücks haben. Allerdings wird die Kennung nur in der obersten Schicht erzeugt, so dass der Einfluss sehr gering sein sollte. Die mittels eines Lasers erzeugte weitere Kennung ist üblicherweise beständiger als eine aufgedruckte weitere Kennung.

In einer erfindungsgemäßen Variante umfasst die erste Kennung und/oder die weitere Kennung einen Daten-Matrix-Code, einen QR-Code, einen Barcode, eine oder mehrere Nummern und/oder Ziffern, oder sonstige Zeichen oder Symbole, insbesondere zur Angabe einer Teile- oder Zeichnungsnummer, einer Lieferantenkennung, einer Auftragsnummer, oder dergleichen.

Nach einer Variante der Erfindung wird das Werkstück mit mehreren ersten Kennungen versehen, wenn das Werkstück in einem der nachfolgenden Herstellungsschritte geteilt wird, wobei die mehreren ersten Kennungen vorzugsweise so angeordnet sind, dass jedes geteilte Werkstück eine erste Kennung aufweist. Erfolgt das Teilen des Werkstücks zum Ende des Herstellungsprozesses, so können die einzelnen Teile jeweils mit einer weiteren Kennung mittels des Oberflächenbeschriftungsverfahrens versehen werden und jeweils auf die Prozessdaten und die erste Kennung gemeinsam zurückgreifen.

Gemäß einer erfindungsgemäßen Variante umfassen die erfassten Prozessparameter Soll- und Istwerte von Anlagenautomationen des Schmiedeprozesses oder der anderen Prozessschritte, Maschinendaten, Prozessdaten, Messprotokolle, Kohlenstoffemissionen, oder dergleichen, vorzugsweise Prozesstemperaturen, Werkstücktemperaturen, insbesondere zu unterschiedlichen Zeitpunkten, Prozesszeiten, Taktzeiten, Sprühzeiten, Verweilzeiten, Prozesskräfte, Umform- und Reaktionskräfte, Maschinendaten, Motorstromaufnahme von Haupt- und Nebenantrieben, Auffederung des Pressenkörpers, außerplanmäßige Prozessereignisse, Werkzeugversagen, insbesondere Rissbildung, Verschmiedung von Endstücken, Doppellader, oder dergleichen. Die Kohlenstoffemissionen als Prozessparameter umfassen insbesondere die in dem jeweiligen Prozessschritt angefallenen Kohlenstoffemissionen.

In einer vorteilhaften erfindungsgemäßen Variante werden die Prozessparameter beim Überschreiten und/oder Unterschreiten von vorgegebenen Grenzen oder Schwellwerten zusammen mit der ersten Kennung und/oder der weiteren Kennung in der Datenbank gespeichert. Es erfolgt also nicht zwangsweise eine Speicherung aller Prozessparameter von allen Prozessschritten des Herstellungsprozesses, sondern es werden nur solche Prozessparameter gespeichert, welchen vordefinierte Schwellwerte oder Grenzen überschreiten. Dadurch werden die zu speichernden Datenmengen deutlich reduziert.

Nach einer besonders bevorzugten Variante umfasst das erfindungsgemäße Verfahren das Analysieren der in der Datenbank gespeicherten Prozessdaten zur Identifizierung von mangelhaften oder fehlerhaften Produkten, insbesondere auf Basis von nachträglich entdeckten mangelhaften bzw. fehlerhaften Produkten und Vergleich der Prozessdaten des mangelhaften bzw. fehlerhaften Produkts mit den Prozessdaten in der Datenbank und Identifizieren des entsprechenden Produkts anhand der ersten Kennung und/oder der weiteren Kennung.

Gemäß einer zweckmäßigen Variante der Erfindung umfasst ein Prozessschritt, bei welchem die erste Kennung erhalten bleibt, ein Sandstrahlen, Kugelstrahlen, eine Warmbehandlung wie beispielsweise Einsatzhärten, Carbonitrieren, Vergüten oder dergleichen des Werkstücks.

In einer erfindungsgemäßen Variante umfasst ein Prozessschritt, bei welchem die erste Kennung nicht erhalten bleibt, ein mechanisches Bearbeiten des Werkstücks wie beispielsweise Drehen, Fräsen, Schleifen, oder dergleichen.

Nach einer zweckmäßigen Variante der Erfindung wird die erste Kennung durch eine oder mehrere Markiereinheiten erzeugt, welche unmittelbar vor, in oder hinter der Schmiedevorrichtung angeordnet ist/sind. Durch die unmittelbare Anordnung vor, in oder hinter der Schmiedevorrichtung können die Prozessparameter des Schmiedeprozesses eindeutig der unmittelbar nachfolgend oder zuvor bzw. parallel aufgebrachten ersten Kennung zugeordnet werden. Es besteht keine Gefahr von Verwechslungen zwischen der Schmiedevorrichtung und der Markiereinheit. Sollte dies nicht möglich sein, muss eine eindeutige Zuordnung gewährleistet werden, beispielsweise durch eine optische oder logische Nachverfolgung der Werkstücke zwischen Schmiedevorrichtung und Markiereinheit. Sollte der Schmiedeprozess schneller sein als das Erzeugen der ersten Kennung, werden einer Schmiedevorrichtung vorzugsweise mehrere Markiereinheiten zugeordnet, damit die Erzeugung der ersten Kennung nicht den Durchsatz des Herstellungsprozesses reduziert. In dem Fall muss die Zuordnung der Werkstücke zu den einzelnen Markiereinheiten zusammen mit den zugehörigen Prozessparametern gewährleistet werden.

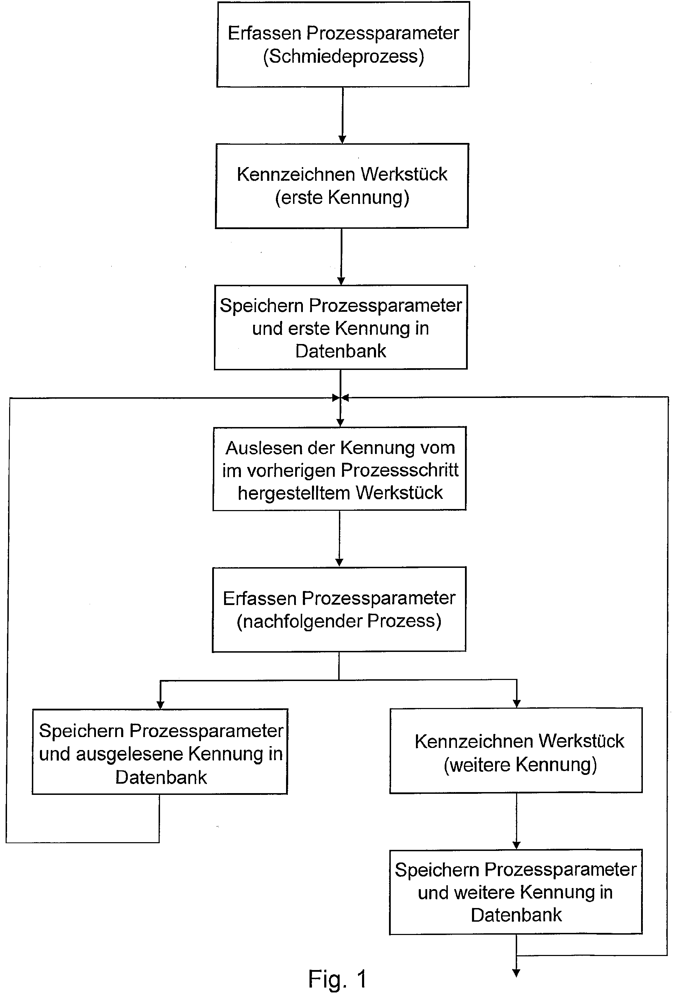

Nachfolgend wird die Erfindung anhand eines in der Figur 1 dargestellten Ausführungsbeispiels näher erläutert. Es zeigt:
- Fig. 1: einen Ablaufplan eines Ausführungsbeispiels eines erfindungsgemäßen Verfahrens zur Rückverfolgung von Schmiedeteilen über den gesamten Herstellungsprozess, insbesondere vom Schmiedeprozess, über Sandstrahlen und Warmbehandlung bis zur mechanischen Bearbeitung.

Fig. 1 zeigt einen Ablaufplan eines Ausführungsbeispiels eines erfindungsgemäßen Verfahrens zur Rückverfolgung von Schmiedeteilen über den gesamten Herstellungsprozess, insbesondere vom Schmiedeprozess, über Sandstrahlen und Warmbehandlung bis zur mechanischen Bearbeitung.

Gemäß dem Ablaufplan des erfindungsgemäßen Verfahrens aus Fig. 1 beginnt der Herstellungsprozess mit einem Schmiedeprozess. Die Prozessparameter des Schmiedeprozesses werden erfindungsgemäß erfasst.

Nach oder während des Schmiedeprozesses wird das in dem Schmiedeprozess hergestellte Werkstück mit einer ersten Kennung versehen. Die erste Kennung wird mittels eines mechanischen Eindringverfahrens erzeugt insbesondere mittels eines Nadeldruckverfahrens oder Prägeverfahrens. Die entsprechenden Prägemittel wie beispielsweise Nadeln bestehen insbesondere aus einem Warmarbeitsstahl, Hartmetall oder dergleichen. Ferner können die Prägemittel bzw. Nadeln eine aktive Kühlung umfassen. Dadurch lässt sich die Standzeit der Prägemittel bzw. Nadeln verlängern.

Um die Vorrichtung zur Erzeugung der ersten Kennung vor den Temperaturen des Schmiedeprozesses und/oder des Werkstücks besser zu schützen, weist diese vorzugsweise eine passive und/oder aktive thermische Schutzeinrichtung auf. Dabei kann es sich beispielsweise um eine thermische Isolation oder eine Kühleinrichtung handeln.

Die erste Kennung wird in einem Bereich des in dem Schmiedeprozess hergestellten Werkstücks erzeugt, welcher in einem der nachfolgenden Prozessschritte mechanisch entfernt wird. Dadurch hat die erstellte erste Kennzeichnung keine negativen Auswirkungen auf das in dem gesamten Herstellungsprozess hergestellte Werkstück/Produkt.

Wird die erste Kennung während des Schmiedeprozesses erzeugt, so erfolgt dies in einem Bereich des Werkstücks, welcher keine Umformung durch den Schmiedeprozess erfährt oder welcher bereits seine endgültige Form durch den Schmiedeprozess erhalten hat. Dadurch wird sichergestellt, dass der Schmiedeprozess die Lesbarkeit der ersten Kennung nicht beeinträchtigt.

Ist der Schmiedeprozess schneller als die Erzeugung der ersten Kennung, können mehrere Vorrichtungen zur Erzeugung der ersten Kennung vorgesehen sein, um den Durchsatz des Herstellungsverfahrens nicht durch die Erzeugung der ersten Kennung negativ zu beeinflussen. Die wenigstens eine Vorrichtung zur Erzeugung der ersten Kennung ist vorzugsweise unmittelbar vor, in oder hinter der Schmiedevorrichtung angeordnet.

Nachdem das Werkstück mit der ersten Kennung versehen wurde, werden die erfassten Prozessparameter des Schmiedeprozesses zusammen mit der ersten Kennung des hergestellten Werkstücks in einer Datenbank gespeichert.

In den nachfolgenden Prozessschritten wird die Kennung des im vorherigen Prozessschritt hergestellten Werkstücks, beispielsweise die erste Kennung des im Schmiedeprozess hergestellten Werkstücks, ausgelesen. Ferner werden in dem nachfolgenden Prozessschritt die Prozessparameter erfasst.

Grundsätzlich wird bei nachfolgenden Prozessschritten unterschieden, ob durch den nachfolgenden Prozessschritt die Lesbarkeit der Kennung des im vorherigen Prozessschritt hergestellten Werkstücks erhalten bleibt oder nicht.

Für den Fall, dass die Lesbarkeit der Kennung des im vorherigen Prozessschritt hergestellten Werkstück erhalten bleibt, ist die Reihenfolge zwischen Auslesen der Kennung des Werkstücks und Erfassen der Prozessparameter des nachfolgenden Prozessschritts nicht relevant und frei wählbar. In diesem Fall werden die erfassten Prozessparameter des nachfolgenden (aktuellen) Prozessschritts erfasst und zu der ausgelesenen Kennung in der Datenbank gespeichert. Danach folgt der nächste Prozessschritt.

Prozessschritte bei denen die Lesbarkeit der ersten Kennung erhalten bleibt, umfassen insbesondere ein Sandstrahlen, Kugelstrahlen, eine Warmbehandlung wie beispielsweise Einsatzhärten, Carbonitrieren, Vergüten oder dergleichen des Werkstücks.

Für den Fall, dass die Lesbarkeit der Kennung des im vorherigen Prozessschritt hergestellten Werkstücks nicht erhalten bleibt, wird zunächst die Kennung des Werkstücks des im vorherigen Prozessschritt hergestellten Werkstücks ausgelesen und nachfolgend werden die Prozessparameter des nachfolgenden (aktuellen) Prozessschritts erfasst, da dabei die Lesbarkeit der Kennung des im vorherigen Prozessschritt erstellten Werkstücks verloren geht. In diesem Fall wird das Werkstück mit einer weiteren Kennung mittels eines Lasers oder durch ein Druckverfahren gekennzeichnet.

Die erfassten Prozessparameter werden anschließend mit der weiteren Kennung in der Datenbank zu der Kennung des im vorherigen Prozessschritt hergestellten Werkstücks, insbesondere der zugehörigen ersten Kennung des entsprechenden Werkstücks gespeichert.

Die weitere Kennung wird dabei insbesondere in einem Bereich des Werkstücks aufgebracht, welcher bei der Verwendung des Werkstücks geringen oder keinen Belastungen ausgesetzt ist.

Ein Prozessschritt, bei welchem die Kennung des im vorherigen Prozessschritt hergestellten Werkstücks nicht erhalten bleibt, umfasst insbesondere ein mechanisches Bearbeiten des Werkstücks wie beispielsweise Drehen, Fräsen, Schleifen, oder dergleichen.

Anschließend kann ein weiterer Prozessschritt folgen oder der Herstellungsprozess ist abgeschlossen.

Die erfassten Prozessparameter des Schmiedeprozesses und/oder der nachfolgenden Prozessschritte umfassen beispielsweise Soll- und Istwerte von einer Anlagenautomation des Schmiedeprozesses oder des nachfolgenden Prozessschrittes, Maschinendaten, Prozessdaten, Messprotokolle, Kohlenstoffemissionen, oder dergleichen. Dazu gehören vorzugsweise Prozesstemperaturen, Werkstücktemperaturen, insbesondere zu unterschiedlichen Zeitpunkten, Prozesszeiten, Taktzeiten, Sprühzeiten, Verweilzeiten, Prozesskräfte, Umform- und Reaktionskräfte, Maschinendaten, Motorstromaufnahme von Haupt- und Nebenantrieben, Auffederung des Pressenkörpers, außerplanmäßige Prozessereignisse, Werkzeugversagen, insbesondere Rissbildung, Verschmiedung von Endstücken, Doppellader, oder dergleichen. Zweckmäßigerweise werden die in einem jeweiligen Prozessschritt angefallenen Kohlenstoffemissionen für den Prozessschritt als Prozessparameter erfasst.

Neben den Prozessparametern können nach einer erfindungsgemäßen Variante in den Prozessschritten zumindest teilweise Qualitätsdaten erfasst werden, welche zusammen mit der ersten Kennung und/oder der weiteren Kennung in der Datenbank gespeichert werden.

Die erste Kennung und/oder die weitere Kennung umfassen beispielsweise einen Daten-Matrix-Code, einen QR-Code, einen Barcode, eine oder mehrere Nummern und/oder Ziffern, oder sonstige Zeichen oder Symbole, insbesondere zur Angabe einer Teile- oder Zeichnungsnummer, einer Lieferantenkennung, einer Auftragsnummer, oder dergleichen. Da die erste Kennung durch ein mechanisches Eindringverfahren erstellt wird, besteht diese vorzugsweise aus einer einfachen nummerischen oder alphanumerischen Zeichenfolge oder einer Punktmatrix. Im Gegensatz dazu kann die weitere mittels eines Lasers oder durch ein Druckverfahren hergestellte Kennzeichnung komplexer aufgebaut sein und zusätzliche Informationen enthalten, beispielsweise in Form eines QR-Codes.

Nach einer Variante der Erfindung wird das Werkstück mit mehreren ersten Kennungen versehen, wenn das Werkstück in einem der nachfolgenden Herstellungsschritte geteilt wird, wobei die mehreren ersten Kennungen vorzugsweise so angeordnet sind, dass jedes geteilte Werkstück eine erste Kennung aufweist. Erfolgt das Teilen des Werkstücks zum Ende des Herstellungsprozesses, so können die einzelnen Teile jeweils mit einer weiteren Kennung mittels des Oberflächenbeschriftungsverfahrens versehen werden und jeweils auf die Prozessdaten und die erste Kennung gemeinsam zurückgreifen.

In einer vorteilhaften erfindungsgemäßen Variante werden die Prozessparameter beim Überschreiten und/oder Unterschreiten von vorgegebenen Grenzen oder Schwellwerten zusammen mit der ersten Kennung und/oder der weiteren Kennung in der Datenbank gespeichert. Es erfolgt also nicht zwangsweise eine Speicherung aller Prozessparameter von allen Prozessschritten des Herstellungsprozesses, sondern es werden nur solche Prozessparameter gespeichert, welchen vordefinierte Schwellwerte oder Grenzen überschreiten. Dadurch werden die zu speichernden Datenmengen deutlich reduziert.

Gemäß einer besonders bevorzugten Variante umfasst das erfindungsgemäße Verfahren das Analysieren der in der Datenbank gespeicherten Prozessdaten zur Identifizierung von mangelhaften oder fehlerhaften Produkten, insbesondere auf Basis von nachträglich entdeckten mangelhaften bzw. fehlerhaften Produkten und Vergleich der Prozessdaten des mangelhaften bzw. fehlerhaften Produkts mit den Prozessdaten in der Datenbank und Identifizieren des entsprechenden Produkts anhand der ersten Kennung und/oder der weiteren Kennung.

## Patentansprüche

1. Verfahren zur Rückverfolgung von Schmiedeteilen über den gesamten Herstellungsprozess, insbesondere vom Schmiedeprozess, über Sandstrahlen und Warmbehandlung bis zur mechanischen Bearbeitung, umfassend die Schritte:
Erfassen von Prozessparametern eines Schmiedeprozesses;
Kennzeichnen des in dem Schmiedeprozess hergestellten Werkstücks mit einer ersten Kennung mittels eines mechanischen Eindringverfahrens;
Speichern der erfassten Prozessparameter des Schmiedeprozesses zusammen mit der ersten Kennung des hergestellten Werkstücks in einer Datenbank;
Auslesen der Kennung von dem im vorherigen Prozessschritt hergestellten Werkstück;
Erfassen von Prozessparametern während nachfolgender Prozessschritte des Herstellungsprozesses;
Speichern der Prozessparameter der nachfolgenden Prozessschritte in der Datenbank zu der ausgelesenen Kennung, sofern die Lesbarkeit der ersten Kennung des Werkstücks durch den nachfolgenden Prozessschritt des Herstellungsprozesses erhalten bleibt;
Kennzeichnen des in dem nachfolgenden Prozessschritt hergestellten Werkstücks mit einer weiteren Kennung mittels eines Lasers oder durch ein Druckverfahren, sofern die Lesbarkeit der ersten Kennung des Werkstücks durch den nachfolgenden Prozessschritt des Herstellungsprozesses nicht erhalten bleibt; und
Speichern der Prozessparameter des nachfolgenden Prozessschrittes zusammen mit der weiteren Kennung zusammen mit den Prozessparametern der vorherigen Prozessschritte und der ersten Kennung in der Datenbank,
wobei
die erste Kennung in einem Bereich des in dem Schmiedeprozess hergestellten Werkstücks erzeugt wird, welcher in einem der nachfolgenden Prozessschritte entfernt wird.

2. Verfahren nach Anspruch 1,
wobei die weitere Kennung in einem Bereich des Werkstücks aufgebracht wird, welche bei der Verwendung des Werkstücks geringen Belastungen ausgesetzt ist.

3. Verfahren nach einem der Ansprüche 1 bis 2,
wobei neben den Prozessparametern in den Prozessschritten zumindest teilweise Qualitätsdaten erfasst werden, welche zusammen mit der ersten Kennung und/oder der weiteren Kennung in der Datenbank gespeichert werden.

4. Verfahren nach einem der Ansprüche 1 bis 3,
wobei die erste Kennung in einem Bereich des Werkstücks erzeugt wird, welcher keine Umformung durch den Schmiedeprozess erfährt oder welcher bereits seine endgültige Form durch den Schmiedeprozess erhalten hat.

5. Verfahren nach einem der Ansprüche 1 bis 4,
wobei die erste Kennung mittels eines Nadeldruckverfahrens oder Nadelprägeverfahrens erzeugt wird.

6. Verfahren nach Anspruch 5,
wobei die Nadeln aus einem Warmarbeitsstahl, Hartmetall oder dergleichen bestehen und/oder eine aktive Kühlung aufweisen.

7. Verfahren nach einem der Ansprüche 1 bis 6,
wobei die Vorrichtung zur Erzeugung der ersten Kennung eine passive und/oder aktive thermische Schutzeinrichtung umfasst.

8. Verfahren nach einem der Ansprüche 1 bis 7,
wobei die erste Kennung und/oder die weitere Kennung einen Daten-Matrix-Code, einen QR-Code, einen Barcode, eine oder mehrere Nummern und/oder Ziffern, oder sonstige Zeichen oder Symbole umfasst, insbesondere zur Angabe einer Teile- oder Zeichnungsnummer, einer Lieferantenkennung, einer Auftragsnummer, oder dergleichen.

9. Verfahren nach einem der Ansprüche 1 bis 8,
wobei das Werkstück mit mehreren ersten Kennungen versehen wird, wenn das Werkstück in einem der nachfolgenden Herstellungsschritte geteilt wird, wobei die mehreren ersten Kennungen vorzugsweise so angeordnet sind, dass jedes geteilte Werkstück eine erste Kennung aufweist.

10. Verfahren nach einem der Ansprüche 1 bis 9,
wobei die erfassten Prozessparameter Soll- und Istwerte von Anlagenautomationen des Schmiedeprozesses oder der anderen Prozessschritte, Maschinendaten, Prozessdaten, Messprotokolle, oder dergleichen umfassen, vorzugsweise Prozesstemperaturen, Werkstücktemperaturen, insbesondere zu unterschiedlichen Zeitpunkten, Prozesszeiten, Taktzeiten, Sprühzeiten, Verweilzeiten, Prozesskräfte, Umform- und Reaktionskräfte, Maschinendaten, Motorstromaufnahme von Haupt- und Nebenantrieben, Auffederung des Pressenkörpers, außerplanmäßige Prozessereignisse, Werkzeugversagen, insbesondere Rissbildung, Verschmiedung von Endstücken, Doppellader, oder dergleichen.

11. Verfahren nach einem der Ansprüche 1 bis 10,
wobei die Prozessparameter beim Überschreiten und/oder Unterschreiten von vorgegebenen Grenzen oder Schwellwerten zusammen mit der ersten Kennung und/oder der weiteren Kennung in der Datenbank gespeichert werden.

12. Verfahren nach einem der Ansprüche 1 bis 11, umfassend das Analysieren der in der Datenbank gespeicherten Prozessdaten zur Identifizierung von mangelhaften oder fehlerhaften Produkten, insbesondere auf Basis von nachträglich entdeckten mangelhaften bzw. fehlerhaften Produkten und Vergleich der Prozessdaten des mangelhaften bzw. fehlerhaften Produkts mit den Prozessdaten in der Datenbank und Identifizieren des entsprechenden Produkts anhand der ersten Kennung und/oder der weiteren Kennung.

13. Verfahren nach einem der Ansprüche 1 bis 12**,**
wobei ein Prozessschritt, bei welchem die erste Kennung erhalten bleibt, ein Sandstrahlen, Kugelstrahlen, eine Warmbehandlung wie beispielsweise Einsatzhärten, Carbonitrieren, Vergüten oder dergleichen des Werkstücks umfasst.

14. Verfahren nach einem der Ansprüche 1 bis 13,
wobei ein Prozessschritt, bei welchem die erste Kennung nicht erhalten bleibt, ein mechanisches Bearbeiten des Werkstücks wie beispielsweise Drehen, Fräsen, Schleifen, oder dergleichen umfasst.

15. Verfahren nach einem der Ansprüche 1 bis 14,
wobei die erste Kennung durch eine oder mehrere Markiereinheiten erzeugt wird, welche unmittelbar vor, in oder hinter der Schmiedevorrichtung angeordnet ist/sind.

## Claims

1. Method of tracking forged parts over the entire production process, particularly from the forging process, via sandblasting and heat treatment, to mechanical processing, comprising the steps:
detecting process parameters of a forging process;
identifying the workpiece, which is produced in the forging process, by a first identification by means of a mechanical penetration method;
storing the detected process parameters of the forging process together with the first identification of the produced workpiece in a databank;
reading out the identification from the workpiece produced in the preceding process step;
detecting process parameters during subsequent process steps of the production process;
storing the process parameters of the subsequent process steps in the databank with respect to the read-out identification insofar as the legibility of the first identification of the workpiece is maintained by the following process step of the production process;
identifying the workpiece, which is produced in the following process step, by a further identification by means of a laser or by a printing method insofar as the legibility of the first identification of the workpiece is not maintained by the following process step of the production process; and
storing the process parameters of the following process step together with the further identification together with the process parameters of the previous process steps and the first identification in the databank,
wherein the first identification is produced in a region, which is removed in one of the subsequent process steps, of the workpiece produced in the forging process.

2. Method according to claim 1, wherein the further identification is applied in a region, which is exposed to low loadings in use of the workpiece, of the workpiece.

3. Method according to one of claims 1 and 2, wherein in addition to the process parameters there is detection in the process steps of at least partial quality data which are stored together with the first identification and/or the further identification in the databank.

4. Method according to any one of claims 1 to 3, wherein the first identification is produced in a region, which does not experience any deformation by the forging process or which has already received its final form by the forging process, of the workpiece.

5. Method according to any one of claims 1 to 4, wherein the first identification is produced by means of a needle pressure method or needle stamping method.

6. Method according to claim 5, wherein the needles consist of hot-work steel, hard metal or the like and/or have active cooling.

7. Method according to any one of claims 1 to 6, wherein the device for producing the first identification comprises a passive and/or active thermal protection device.

8. Method according to any one of claims 1 to 7, wherein the first identification and/or the further identification comprises or comprise a data-matrix code, a QR code, a barcode, one or more numbers and/or numerals or other marks or symbols, particularly for statement of a part number or drawing number, a supplier identification, an order number or the like.

9. Method according to any one of claims 1 to 8, wherein the workpiece is provided with a plurality of first identifications if the workpiece is divided in one of the subsequent production steps, wherein the plurality of first identifications is preferably so arranged that each divided workpiece has a first identification.

10. Method according to any one of claims 1 to 9, wherein the detected process parameters comprise target and actual values of plant automations of the forging process or of the other process steps, machine data, process data, measurement protocols or the like, preferably process temperatures, workpiece temperatures, particularly at different points in time, process times, cycle times, spray times, dwell times, process forces, reshaping and reaction forces, machine data, motor current consumption by main and auxiliary drives, spring-back of the press body, unplanned process events, tool failures, particularly crack formation, forging of end pieces, wire pairs or the like.

11. Method according to any one of claims 1 to 10, wherein the process parameters in the case of exceeding and/or falling below predetermined limits or threshold values are stored in the databank together with the first identification and/or the further identification.

12. Method according to any one of claims 1 to 11, comprising analysing process data, which is stored in the databank, for identification of deficient or faulty products, particularly on the basis of subsequently discovered deficient or faulty products and comparison of the process data of the deficient or faulty product with the process data in the databank, and identifying the corresponding product by way of the first identification and/or the further identification.

13. Method according to any one of claims 1 to 12, wherein a process step in which the first identification is maintained comprises sandblasting, bead blasting, heat treatment such as, for example, use hardening, carbonitriding, hardening/tempering or the like of the workpiece.

14. Method according to any one of claims 1 to 13, wherein a process step in which the first identification is not maintained comprises a mechanical processing of the workpiece such as, for example, turning, milling, grinding or the like.

15. Method according to any one of claims 1 to 14, wherein the first identification is produced by one or more marking units which is or are arranged directly in front of, in or behind the forging device.

## Revendications

1. Procédé de traçabilité de pièces forgées sur l'ensemble du processus de fabrication, en particulier du processus de forgeage, en passant par le sablage et le traitement thermique jusqu'à l'usinage mécanique, comprenant les étapes suivantes :
saisir des paramètres de processus d'un processus de forgeage ;
marquer la pièce fabriquée lors du processus de forgeage avec un premier identifiant au moyen d'un procédé de pénétration mécanique ;
enregistrer les paramètres de processus saisis du processus de forgeage conjointement avec le premier identifiant de la pièce fabriquée dans une base de données ;
lire l'identifiant de la pièce fabriquée lors de l'étape de processus précédente ;
saisir des paramètres de processus pendant des étapes de processus suivantes du processus de fabrication ;
enregistrer les paramètres de processus des étapes de processus suivantes dans la base de données pour l'identifiant lu, dans la mesure où la lisibilité du premier identifiant de la pièce est conservée par l'étape de processus suivante du processus de fabrication ;
marquer la pièce fabriquée lors de l'étape de processus suivante avec un identifiant supplémentaire au moyen d'un laser ou par un procédé d'impression, dans la mesure où la lisibilité du premier identifiant de la pièce n'est pas conservée par l'étape de processus suivante du processus de fabrication ; et
enregistrer les paramètres de processus de l'étape de processus suivante conjointement avec l'identifiant supplémentaire conjointement avec les paramètres de processus des étapes de processus précédentes et le premier identifiant dans la base de données, le premier identifiant étant généré dans une zone de la pièce fabriquée lors du processus de forgeage qui est retirée lors de l'une des étapes de processus suivantes.

2. Procédé selon la revendication 1,
dans lequel l'identifiant supplémentaire est appliqué dans une zone de la pièce qui est soumise à de faibles contraintes lors de l'utilisation de la pièce.

3. Procédé selon l'une des revendications 1 à 2,
dans lequel, outre les paramètres de processus dans les étapes de processus, des données de qualité sont au moins partiellement saisies, lesquelles sont enregistrées dans la base de données conjointement avec le premier identifiant et/ou l'identifiant supplémentaire.

4. Procédé selon l'une des revendications 1 à 3,
dans lequel le premier identifiant est généré dans une zone de la pièce qui ne subit aucune déformation par le processus de forgeage ou qui a déjà reçu sa forme finale par le processus de forgeage.

5. Procédé selon l'une des revendications 1 à 4,
dans lequel le premier identifiant est généré au moyen d'un procédé de marquage par aiguilles ou d'un procédé de gravure par aiguilles.

6. Procédé selon la revendication 5,
dans lequel les aiguilles sont constituées d'un acier pour travail à chaud, de carbure ou similaire et/ou présentent un refroidissement actif.

7. Procédé selon l'une des revendications 1 à 6,
dans lequel le dispositif pour générer le premier identifiant comprend un système de protection thermique passif et/ou actif.

8. Procédé selon l'une des revendications 1 à 7,
dans lequel le premier identifiant et/ou l'identifiant supplémentaire comprend un code Data Matrix, un code QR, un code-barres, un ou plusieurs numéros et/ou chiffres, ou d'autres signes ou symboles, en particulier pour l'indication d'un numéro de pièce ou de dessin, d'un identifiant de fournisseur, d'un numéro de commande, ou similaire.

9. Procédé selon l'une des revendications 1 à 8,
dans lequel la pièce est pourvue de plusieurs premiers identifiants lorsque la pièce est divisée lors de l'une des étapes de fabrication suivantes, les plusieurs premiers identifiants étant de préférence disposés de telle sorte que chaque pièce divisée présente un premier identifiant.

10. Procédé selon l'une des revendications 1 à 9,
dans lequel les paramètres de processus saisis comprennent des valeurs de consigne et des valeurs réelles de systèmes d'automatisation d'installations du processus de forgeage ou des autres étapes de processus, des données de machine, des données de processus, des protocoles de mesure, ou similaire, de préférence des températures de processus, des températures de pièce, en particulier à différents instants, des temps de processus, des temps de cycle, des temps de pulvérisation, des temps de séjour, des forces de processus, des forces de déformation et de réaction, des données de machine, le courant absorbé par le moteur des entraînements principaux et auxiliaires, la flexion élastique du corps de la presse, des événements de processus imprévus, une défaillance d'outil, en particulier une fissuration, un forgeage défectueux des extrémités, un double chargement, ou similaire.

11. Procédé selon l'une des revendications 1 à 10,
dans lequel les paramètres de processus sont enregistrés dans la base de données conjointement avec le premier identifiant et/ou l'identifiant supplémentaire en cas de dépassement vers le haut et/ou vers le bas de limites ou de valeurs seuils prédéfinies.

12. Procédé selon l'une des revendications 1 à 11,
comprenant l'analyse des données de processus enregistrées dans la base de données pour l'identification de produits défectueux ou erronés, en particulier sur la base de produits défectueux ou erronés découverts ultérieurement et la comparaison des données de processus du produit défectueux ou erroné avec les données de processus dans la base de données et l'identification du produit correspondant à l'aide du premier identifiant et/ou de l'identifiant supplémentaire.

13. Procédé selon l'une des revendications 1 à 12,
dans lequel une étape de processus lors de laquelle le premier identifiant est conservé, comprend un sablage, un grenaillage, un traitement thermique tel que par exemple une cémentation, une carbonitruration, une trempe et revenu ou similaire de la pièce.

14. Procédé selon l'une des revendications 1 à 13,
dans lequel une étape de processus lors de laquelle le premier identifiant n'est pas conservé, comprend un usinage mécanique de la pièce tel que par exemple un tournage, un fraisage, une rectification, ou similaire.

15. Procédé selon l'une des revendications 1 à 14,
dans lequel le premier identifiant est généré par une ou plusieurs unités de marquage qui est/sont disposée(s) immédiatement avant, dans ou après le dispositif de forgeage.
